# EUROPÄISCHE PATENTSCHRIFT

(11) **EP 0 874 482 B1**
(45) Veröffentlichungstag und Bekanntmachung des Hinweises auf die Patenterteilung: **24.05.2006**
(21) Anmeldenummer: 98100371.8
(22) Anmeldetag: 12.01.1998
(51) Int. Cl.: H04B 10/24

(54) **Anordnung zum bidirektionalen Senden und Empfangen optischer Signale**
Arrangement for transmitting and receiving optical signals
Dispositif pour l'émission et réception de signaux optiques

(30) Priorität: 22.04.1997 DE 19716838
(43) Veröffentlichungstag der Anmeldung: 28.10.1998
(73) Patentinhaber: Deutsche Telekom AG, 53113 Bonn (DE)
(72) Erfinder: Ziemann, Olaf, Dr.-Ing., 12307 Berlin (DE)

(56) Entgegenhaltungen:
- EP-A- 0 290 242
- GB-A- 2 011 610

## Beschreibung

Die Erfindung betrifft eine Anordnung zum Senden und Empfangen optischer Signale mit wenigstens einer Sendeeinrichtung und wenigstens einer Empfangseinrichtung und einer Lichtleitfaser zur Übertragung der optischen Signale.

### Stand der Technik

Anordnungen der gattungsgemäßen Art sind bekannt. Diese werden dazu eingesetzt, um optische Signale über eine Übertragungsstrecke zu übertragen. Hierzu ist wenigstens eine Lichtleitfaser vorgesehen, an deren Enden jeweils wenigstens eine Sendeeinrichtung und wenigstens eine Empfangseinrichtung vorgesehen sind. Mittels einer derartigen Einrichtung ist eine bidirektionale Übertragung von Daten möglich. Die bidirektionale Datenübertragung kann sowohl mit Einmoden-Lichtleitfasersystemen als auch mit Mehrmoden-Lichtleitfasersystemen erfolgen. Die Übertragung der Signale kann hierbei entweder mit einer Wellenlänge oder unterschiedlichen Wellenlängen erfolgen. Zur Trennung der bidirektionalen Signale sind spezielle optische Komponenten, beispielsweise strahlenteilende Koppler mit nachgeschalteten Filtern oder wellenlängenteilende Koppler, bekannt. Hierbei ist nachteilig, daß durch die speziellen optischen Komponenten einerseits ein zusätzlicher Platzbedarf besteht und andererseits relativ hohe Leistungsverluste durch eine Dämpfungswirkung der speziellen optischen Komponenten auftreten.

### Vorteile der Erfindung

Der Erfindung liegt die Aufgabe zugrunde, eine Anordnung der gattungsgemäßen Art zu schaffen, die einfach aufgebaut ist, zuverlässig funktioniert und relativ geringe Leistungsverluste aufweist.

Erfindungsgemäß wird diese Aufgabe mittels einer Anordnung mit den im Anspruch 1 genannten Merkmalen gelöst. Dadurch, daß die Sendeeinrichtung und die Empfangseinrichtung direkt einer optischen Wirkfläche der Lichtleitfaser zugeordnet sind, wird das Zwischenschalten zusätzlicher spezieller optischer Komponenten nicht notwendig. Insbesondere bei Lichtleitfasern mit relativ großem Querschnitt kann eine direkte Ankopplung der Sendeeinrichtung und der Empfangseinrichtung an eine Stirnfläche der Lichtleitfaser erfolgen, da bekannte Bauelemente zum Senden und Empfangen optischer Signale, beispielsweise Laserdioden oder Superlumineszensdioden eine relativ geringe Baugröße aufweisen, die nicht über einen Querschnitt der Lichtleitfaser hinausgehen. Dadurch, daß vorzugsweise der Querschnitt der optischen Wirkfläche der Lichtleitfaser größer ist als die Summe der Querschnitte der optischen Wirkflächen der Sendeeinrichtung und der Empfangseinrichtung, ist eine unkritische Einkopplung der zu übertragenden optischen Signale, sowie die für eine bidirektionale Übertragung notwendige Richtwirkung problemlos erzielbar.

Ein Querschnitt der optischen Wirkfläche der Empfangseinrichtung kann bevorzugt auch ähnlich groß oder größer als die optische Wirkfläche der Lichtleitfaser sein, da hierdurch eine Einkopplung der Signale nicht beeinträchtigt wird.

In vorteilhafter Ausgestaltung der Erfindung ist vorgesehen, daß die Sendeeinrichtung und die Empfangseinrichtung nebeneinander positioniert sind. Hierdurch wird sehr vorteilhaft erreicht, daß die gesamte zur Verfügung stehende optische Wirkfläche der Lichtleitfaser in einen Bereich für die Empfangseinrichtung und einen Bereich für die Sendeeinrichtung aufgeteilt ist, ohne daß die Wirksamkeit der Anordnung beeinträchtigt ist. Durch eine bevorzugterweise optimierte Anpassung der Querschnitte der Empfangseinrichtung und der Sendeeinrichtung kann die nicht nutzbare optische Wirkfläche der Lichtleitfaser relativ klein gehalten werden.

In weiterer bevorzugter Ausgestaltung der Erfindung ist vorgesehen, daß die Empfangseinrichtung und die Sendeeinrichtung übereinander angeordnet sind, wobei die Sendeeinrichtung zwischen der optischen Wirkfläche der Lichtleitfaser und der Empfangseinrichtung liegt. Hierdurch wird die optisch nicht wirksame Wirkfläche (Verlustfläche) der Empfangseinrichtung auf die optisch wirksame Fläche der Sendeeinrichtung beschränkt. Somit kann der Querschnitt der Lichtleitfaser maximal ausgenutzt werden. Eine Leistungsbeeinträchtigung durch die vor der Empfangseinrichtung liegende Sendeeinrichtung ist auf ein vernachlässigbares Minimum reduziert.

Ferner ist in bevorzugter Ausgestaltung der Erfindung vorgesehen, daß bei einem bidirektionalen Betrieb mit Mehrmoden-Lichtleitfasernsystemen den Empfängereinrichtungen ein Filter zugeordnet ist, dessen optisch wirksame Querschnittsfläche der Empfangseinrichtung angepaßt ist. Somit ist ohne großen zusätzlichen Aufwand ein Wellenlängenmultiplex (WDM)-Betrieb zur Erhöhung der Dynamik der gesamten Anordnung erzielbar.

Weitere vorteilhafte Ausgestaltungen der Erfindung ergeben sich aus den übrigen, in den Unteransprüchen genannten Merkmalen

### Zeichnungen

Die Erfindung wird nachfolgend in Ausführungsbeispielen anhand der zugehörigen Zeichnungen näher erläutert. Es zeigen:
- Figur 1: eine schematische Gesamtansicht einer Anordnung zum bidirektionalen Übertragen optischer Signale;
- Figuren 2-4: schematische Vorderansichten von Koppelstellen;

- Figuren 4-8: schematische Draufsichten von Koppelstellen;
- Figur 9: eine schematische Gesamtansicht einer erfindungsgemäßen Anordnung und
- Figur 10: eine schematische Darstellung der Pegelverhältnisse der Anordnung gemäß Figur 9.

### Beschreibung der Ausführungsbeispiele

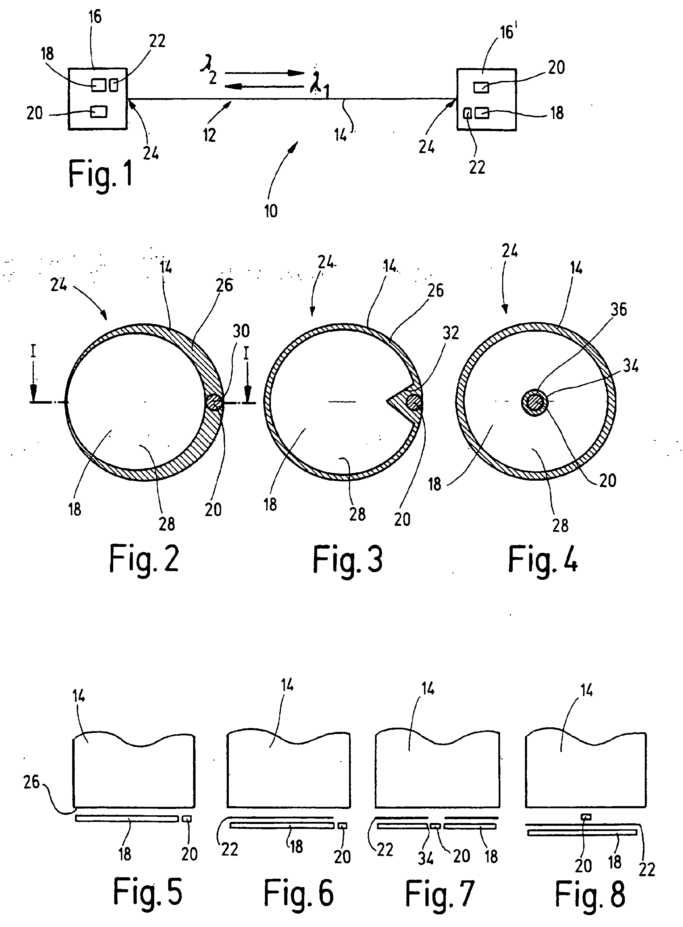

Figur 1 zeigt schematisch eine Gesamtansicht einer Anordnung 10 zum bidirektionalen Übertragen optischer Signale. Die Anordnung 10 umfaßt eine Übertragungsstrecke 12, die von einer Lichtleitfaser 14 gebildet ist. Die Lichtleitfaser 14 kann beispielsweise eine Einmoden-Lichtleitfaser oder eine Mehrmoden-Lichtleitfaser sein. Beispielsweise wird eine optische Polymerfaser mit einem Durchmesser von 1 mm verwendet. An den Endpunkten der Übertragungsstrecke 12 sind jeweils ein Transceiver 16 angeordnet, die jeweils hier angedeutete Empfangseinrichtungen 18 und Sendeeinrichtungen 20 aufweisen. Eine bidirektionale Übertragung optischer Signale kann entweder mit einer Wellenlänge oder mit unterschiedlichen Wellenlängen, einem sogenannten Wellenlängenmultiplex (WDM) erfolgen.

Durch die Verwendung von unterschiedlichen Wellenlängen, das heißt, die Übertragung in Hin- und Rückrichtung erfolgt mit unterschiedlichen Wellenlängen, kann den Empfangseinrichtungen 18 ein optisches Filter 22 zugeordnet werden, das für eine Wellenlänge der eigenen Sendeeinrichtung sperrt. Hierdurch wird die Dynamik der optischen Signalübertragung erhöht, da ein sogenanntes Nahnebensprechen reduziert wird.

Nachfolgend wird eine Koppelstelle 24 zwischen der Lichtleitfaser 14 und den Transceivern 16 näher erläutert. Die Figuren 2 bis 4 zeigen jeweils Draufsichten auf die Koppelstelle 24 - und zwar aus Sicht der Transceiver 16 in Richtung der Lichtleitfaser 14.

Es wird deutlich, daß vor dem Querschnitt der Lichtleitfaser 14 die Empfangseinrichtung 18 und die Sendeeinrichtung 20 derart angeordnet sind, daß eine flächenmäßige Überdeckung einer optischen Wirkfläche 26, hier die Stirnfläche, der Lichtleitfaser 14 mit den optisch wirksamen Flächen 28 der Empfangseinrichtung 18 und 30 der Sendeeinrichtung 20 gegeben ist. Die Summe der optischen Wirkflächen 28 und 30 ist geringer als die optische Wirkfläche 26. Als Empfangseinrichtung 18 ist beispielsweise eine pin-Photodiode und als Sendeeinrichtung 20, beispielsweise eine Laserdiode eingesetzt. Dadurch, daß die Empfangseinrichtung 18 und die Sendeeinrichtung 20 nebeneinanderliegend quasi von der optischen Wirkfläche 26 der Lichtleitfaser 14 überdeckt werden, ist ein Einkoppeln der optischen Signale sowohl von der Sendeeinrichtung 20 in die Lichtleitfaser als auch von der Lichtleitfaser 14 in die Empfangseinrichtung 18 unkritisch. Da die Empfangseinrichtung 18 im wesentlichen die gesamte optische Wirkfläche 26 der Lichtleitfaser 14 abdeckt, erhält diese praktisch die gesamte empfangene Leistung. Die Verlustfläche, die sich durch die Differenz zwischen der optischen Wirkfläche 26 der Lichtleitfaser 14 und der optischen Wirkfläche 28 der Empfangseinrichtung 18 ergibt, ist vernachlässigbar klein.

Die Figuren 3 und 4 zeigen weitere Ausführungsvarianten der Anordnung der Empfangseinrichtung 18 bzw. der Sendeeinrichtung 20. Gemäß Figur 3 ist die optisch wirksame Fläche 28 der Empfangseinrichtung 18 weiter der optisch wirksamen Fläche 26 der Lichtleitfaser 14 angepaßt. Die Empfangseinrichtung 18 weist lediglich einen Ausschnitt 32 auf, der der Anordnung der Sendeeinrichtung 20 dient. Durch die in Figur 3 beschriebene Anordnung wird die Differenz zwischen der optischen Wirkfläche 26 der Lichtleitfaser 14 und der optischen Wirkfläche 28 der Empfangseinrichtung 18 weiter verringert, so daß die Verlustleistung der übertragenden optischen Signale nochmals minimiert ist.

Gemäß der in Figur 4 gezeigten Anordnung kann eine nochmalige Minimierung dieser Verlustleistung erfolgen. Hier ist die Sendeeinrichtung 20, vorzugsweise zentrisch, in einer vorzugsweise kreisrunden Ausnehmung 34 der Empfangseinrichtung 18 angeordnet. Es verbleibt lediglich noch ein schmaler Spalt 36 zwischen der Empfangseinrichtung 18 und der Sendeeinrichtung 20, so daß die Verlustfläche durch den Durchmesser der Ausnehmung 34 gegeben ist.

Die Figuren 5 bis 8 zeigen Draufsichten auf die Koppelstelle 24 entlang der Schnittlinie I/I gemäß der Figuren 2 bis 4. Gleiche Teile wie in den vorhergehenden Figuren sind mit gleichen Bezugszeichen versehen und nicht nochmals erläutert.

In Figur 5 ist die-Draufsicht gemäß Figur 2 gezeigt, wobei deutlich wird, daß die Empfangseinrichtung 18 und die Sendeeinrichtung 20 unmittelbar der optischen Wirkfläche 26, hier der Stirnfläche, der Lichtleitfaser 14 gegenüberliegen.

Gemäß dem in Figur 6 gezeigten Ausführungsbeispiel ist zwischen der Empfangseinrichtung 18 und der Lichtleitfaser 14 zusätzlich das Filter 22 angeordnet. Das Filter 22 ist so ausgelegt, daß optische Signale der Wellenlänge λ₂ des gegenüberliegenden Transceivers 16 durchgelassen werden, während optische Signale der Wellenlänge λ₁ der eigenen Sendeeinrichtung 20 gesperrt werden. Hierdurch wird erreicht, daß von der Lichtleitfaser 14, insbesondere von deren optischen Wirkfläche 26 zurückreflektierte optische Signale nicht die "eigene" Empfangseinrichtung 18 erreichen. Hierdurch wird ein sogenanntes Nahnebensprechen reduziert.

Figur 7 zeigt die Anordnung gemäß Figur 4, wobei hier das Filter 22 ebenfalls die Ausnehmung 34 aufweist, so daß die Sendeeinrichtung 20 optische Signale in die Lichtleitfaser 14 einkoppeln kann.

In der Figur 8 ist eine bevorzugte Ausführungsvariante gezeigt, bei der die Empfangseinrichtung 18 und die Sendeeinrichtung 20 nicht nebeneinander (wie in den Figuren 2 bis 7 gezeigt), sondern die Empfangseinrichtung 18 und die Sendeeinrichtung 20 übereinander positioniert sind. Die Sendeeinrichtung 20 ist quasi zwischen das der Empfangseinrichtung 18 zugeordneten Filter 22 und der Lichtleitfaser 14 angeordnet. Hierdurch wird erreicht, daß die optische Verlustfläche zur Einkopplung optischer Signale von der Lichtleitfaser 14 an die Empfangseinrichtung 18 auf die tatsächliche optische Wirkfläche 30 der Sendeeinrichtung 20 beschränkt bleibt. Dadurch, daß diese eine sehr geringe Wirkfläche besitzt, erhält der Empfänger 18 praktisch die gesamte empfangene Leistung. Die Verlustleistung geht gegen Null und liegt allenfalls im Bereich von zirka 0,5 dB, wenn ein Durchmesser der Sendeeinrichtung 20 beispielsweise ¹/₃ eines Durchmessers der Lichtleitfaser 14 entspricht.

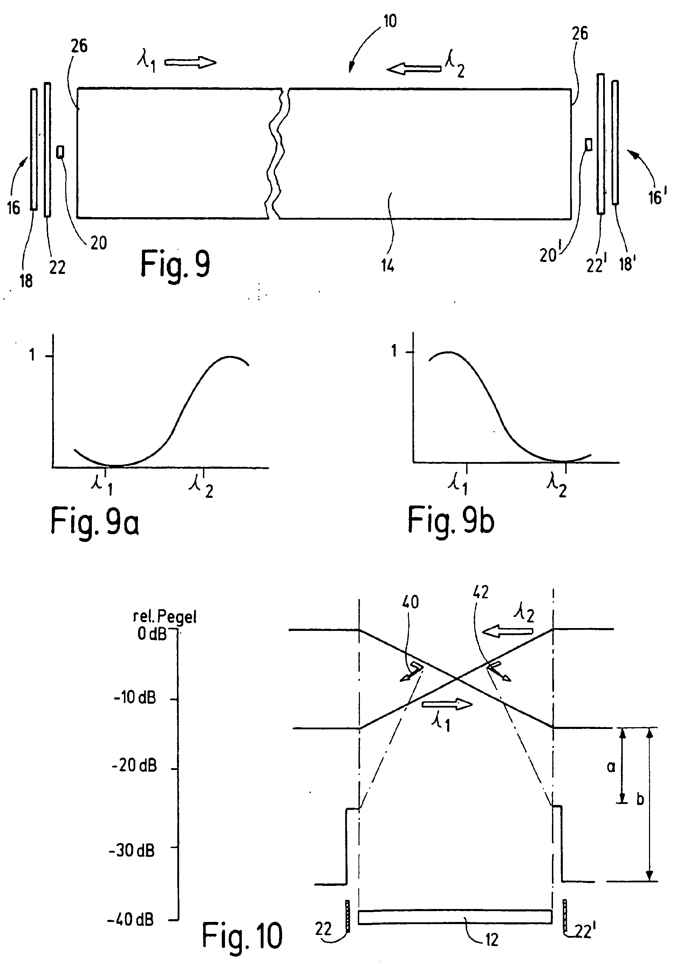

In der Figur 9 ist die Anordnung 10 mit zwei Transceivern 16, 16' gemäß dem in Figur 8 gezeigten Ausführungsbeispiel dargestellt. Das Filter 22 des Transceivers 16 ist für optische Signale der von der Sendeeinrichtung 20 des Transceivers 16 abgestrahlte optische Signale der Wellenlänge λ₁ gesperrt, während optische Signale der Wellenlänge λ₂ die von der Sendeeinrichtung 20' des Transceivers 16' abgestrahlt werden, durchgelassen werden. Anhand des in Figur 9 a verdeutlichten Transmissionsgrades des Filters 22 des Transceivers 16 werden diese Verhältnisse deutlich.

Der in Figur 9 b dargestellte Transmissionsgrad des Filters 22' des Transceivers 16' ist gerade für die optischen Signale der Wellenlänge λ₁ der Sendeeinrichtung 20 des Transceivers 16 durchlässig, während er für optische Signale der Wellenlänge λ₂ der Sendeeinrichtung 20' des Transceivers 16' sperrt. Somit können mit der beschriebenen Anordnung der Empfangseinrichtungen 18, 18' bzw. Sendeeinrichtungen 20, 20' bidirektionale Übertragungen optischer Signale realisiert werden, wobei gleichzeitig für die Erhöhung der Dynamik ein Wellenlängenmultiplex (WDM) eingesetzt werden kann.

In der Figur 10 sind die sich bei einem bidirektionalen Betrieb der in Figur 9 gezeigten Anordnung 10 einstellenden relativen Pegelverhältnisse verdeutlicht. Es sind jeweils die Leistungen der optischen Signale der Wellenlängen λ₁ und λ₂ dargestellt.

Ausgangssituation ist, daß durch die Sendeeinrichtungen 20, 20' jeweils optische Signale der Wellenlängen λ₁ bzw. λ₂ mit maximaler gegebener Leistung in die Lichtleitfaser 14 eingekoppelt werden. Da zu diesem Zeitpunkt die Verlustleistung 0 ist, beträgt der relative Pegel 0 dB. Durch Übertragungsverluste während der Übertragung der optischen Signale über die Übertragungsstrecke 12 ergeben sich Leistungseinbußen bei den empfangenen optischen Signalen an den jeweiligen gegenüberliegenden Empfangseinrichtungen 18. Diese Leistungsverluste werden unter anderem durch die sogenannten Nahnebensprechenverluste 40 beziehungsweise 42 beeinflußt. Durch Einkoppeln der optischen Signale von den Sendeeinrichtungen 20, 20' in die Lichtleitfaser 14 entstehen Reflexionen, die beispielsweise durch die Stirnfläche (optische Wirkfläche 26) der Lichtleitfaser 14 bestimmt werden. Ohne Vorsehen der Filter 22, 22' ergibt sich ein relativ kleiner Signalstörabstand a, der zu einer relativ hohen Systemverschlechterung führt. Durch Einsatz der Filter 22, 22' ergibt sich ein relativ großer Signalstörabstand b. Dies resultiert daraus, daß das Nahnebensprechen 40 beziehungsweise 42 durch das Herausfiltern optischer Signale der Wellenlängen λ₁ bzw. λ₂ für die Empfangseinrichtungen 18, 18' der jeweiligen "eigenen" Sendeeinrichtungen 20, 20' erfolgt. Die Verlustleistung wird hierdurch drastisch reduziert.

## Patentansprüche

1. Anordnung zum bidirektionalen Senden und Empfangen optischer Signale mit wenigstens einer Empfangseinrichtung (18) und wenigstens einer Sendeeinrichtung (20) und einer Lichtleitfaser zum Übertragen der optischen Signale, wobei ein Filter (22) der Empfangseinrichtung (18) zugeordnet ist, das für optische Signale der Wellenlänge (λ) einer der Empfangseinrichtungen zugehörigen Sendeeinrichtung (20) sperrt und für die optischen Signale der Wellenlänge (λ) einer der Empfangseinrichtung (18) nicht zugeordneten Sendeinrichtung (20) durchlässig ist.
**dadurch gekennzeichnet,**
**dass** die Lichtleitfaser (14) einmodig oder mehrmodig ist, der Durchmesser der Lichtleitfaser (14) zirka 1 mm beträgt und die Lichtleitfaser (14) eine optische Polymerfaser ist.

## Claims

1. Arrangement for bidirectional transmission and reception of optical signals, having at least one receiving device (18) and at least one transmitting device (20), and having an optical fiber for transmitting the optical signals, a filter (22) being associated with the receiving device (18), said filter blocking optical signals of the wavelength (λ) of a transmitting device (20) associated with the receiving devices and transmitting optical signals of the wavelength (λ) of a transmitting device (20) not associated with the receiving device (18),
**characterized in that**
the optical fiber (14) is single-mode or multimode, the diameter of the optical fiber (14) is approximately 1 mm, and the optical fiber (14) is a polymer optical fiber.

## Revendications

1. Dispositif d'émission et de réception bidirectionnelles de signaux optiques comportant au moins un équipement de réception (18) et au moins un équipement d'émission (20) ainsi qu'une fibre optique pour la transmission des signaux optiques, un filtre (22) étant affecté à l'équipement de réception (18), lequel bloque les signaux optiques de la longueur d'onde (λ) d'un équipement d'émission (20) associé aux équipements de réception et laisse passer les signaux optiques de la longueur d'onde (λ) d'un équipement d'émission (20) non associé à l'équipement de réception (18),
**caractérisé en ce que**
la fibre optique (14) est monomode ou multimode, le diamètre de la fibre optique (14) est d'environ 1 mm et la fibre optique (14) est une fibre optique polymère.
